# EUROPEAN PATENT SPECIFICATION

(11) **EP 0 576 818 B1**
(45) Date of publication and mention of the grant of the patent: **24.04.1996**
(21) Application number: 93107962.8
(22) Date of filing: 17.05.1993
(51) Int. Cl.: B67D 1/00, G01F 11/08

(54) **Dispensing device**
Ausgabevorrichtung
Dispositif de distribution

(30) Priority: 29.05.1992 SE 9201677
(43) Date of publication of application: 05.01.1994
(73) Proprietor: ASEPT INTERNATIONAL AB, S-223 78 Lund (SE)
(72) Inventor: Stern, Leif Einar, S-234 00 Lomma (SE)
(74) Representative: Wagner, Karl Heinz

(56) References cited:
- FR-A- 2 615 845
- US-A- 4 717 047
- US-A- 4 961 508

## Description

The present invention relates to a dispensing device for dispensing a predetermined portion of free-flowing material at each time of dispensing, whereby the free-flowing material preferably consists of free-flowing foodstuff, e.g. viscous foodstuff which preferably is to be dispensed on dishes, e.g. hamburgers, and whereby the dispensing or portioning effect is achieved by means of a liquid or gaseous pressurized medium, preferably compressed air and whereby the dispensing portion has such a shape and elasticity that said portion, by resuming a normal shape when pressure application thereof has ceased, by itself is capable of sucking fresh free-flowing material into a dispensing chamber for subsequent dispensing.

US-A-4 603 793 relates to a dispensing device for dispensing viscous material, e.g. foodstuff. This prior art dispensing device however, is not adapted to permit dispensing of predetermined portions of foodstuff at each time of dispensing, which sets special demands, particularly if the portions are small and the material hard to dispense, as is the case when exact portions of mustard, ketchup, sauce, dressing or similar shall be dispensed quickly on a hamburger.

Other dispensing devices for free-flowing foodstuff are shown in US-A-4 717 047 and 5 016 779, but these devices do not permit exact dispensing of small amounts of foodstuff by means of pressurized medium in gaseous or liquid form, preferably compressed air, if said foodstuff contains very solid constituents and thus, is normally difficult to dispense.

The object of the present invention is to eliminate said drawbacks and to provide by simple means a liquid or gas operated, preferably compressed-air-operated dispensing device of the abovementioned type, which device permits exact dispensing also of small amounts of foodstuff and also if said foodstuff contains very solid constituents and thus, is normally hard to dispense.

This is accomplished according to the invention substantially while the dispensing device defined above has received the characterizing features of subsequent claim 1.

Since the dispensing device is provided with said characterizing features, it is primarily ensured that small, exact amounts of foodstuff can be dispensed or discharged without hindrance of solid constituents in said foodstuff.

The invention will be further described below with reference to the accompanying drawings, in which
figure 1 is a schematic side view of the dispensing device according to the invention;
figure 2 is a longitudinal section through members forming part of the dispensing device, whereby a dispensing portion is shown in its normal shape;
figure 3 is a view similar to fig. 2, but shows the dispensing device after free-flowing material has been sucked into said device;
figure 4 is a view similar to figs. 2 and 3, but shows the dispensing device after the free-flowing material has been dispensed therefrom;
figure 5 is a section through the dispensing device along the line V-V i fig. 3;
figure 6 is a section through the dispensing device with a dispensing portion during the initiation of a dispensing step;
figure 7 is a section similar to fig. 6, but shows the dispensing portion in position after the dispensing step;
figure 8 is a side view, partly in section, of coupling members forming part of the dispensing device before interconnection;
figure 9 shows the coupling members in fig. 8 after interconnection;
figures 10-12 are schematic side views of a nozzle in the dispensing device after dispensing, during cleaning and after cleaning; and
figure 13 is a plan view of an alternative embodiment of the dispensing device according to the invention.

The dispensing device 1 illustrated in the drawings is adapted for dispensing a predetermined portion of free-flowing material 2 at each time of dispensing. The free-flowing material preferably consists of free-flowing foodstuff, e.g. viscous foodstuff such as mustard, ketchup, sauce, dressing or similar, which preferably is to be dispensed on dishes 3, e.g. hamburgers.

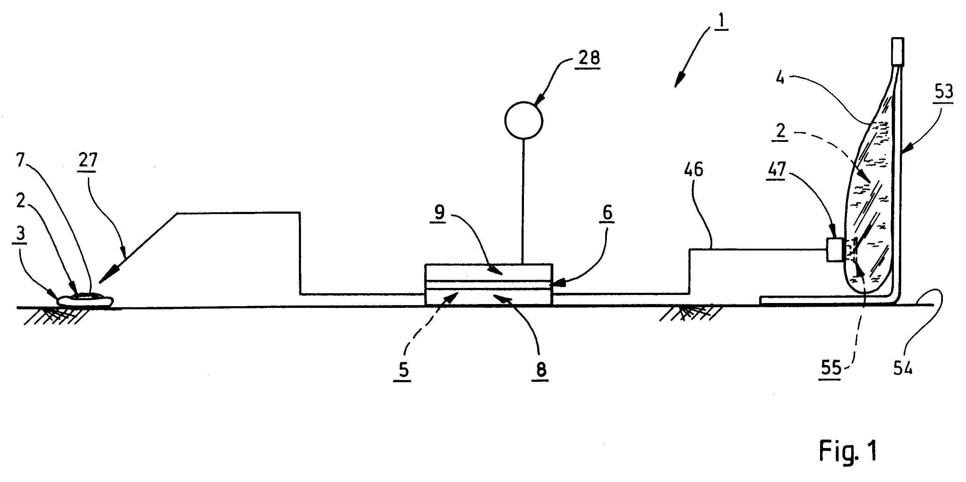

At the embodiment of the dispensing device 1 of fig. 1, the free-flowing material 2 is sucked out of a package 4 into a dispensing chamber 5. The free-flowing material 2 in the dispensing chamber 5 is pressed out of or discharged from said chamber by means of a dispensing means 6 operated by a pressurized medium, whereby said material 2 is dispensed on dishes 3 in the form of predetermined portions 7 at each time of dispensing.

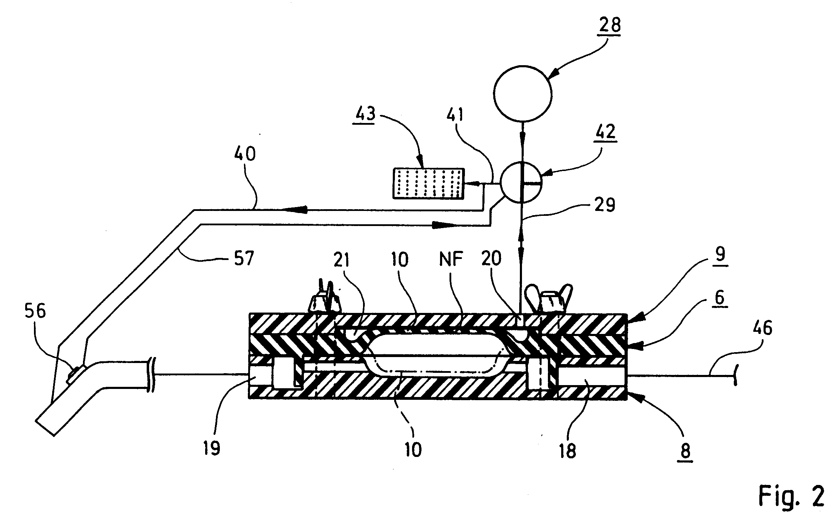

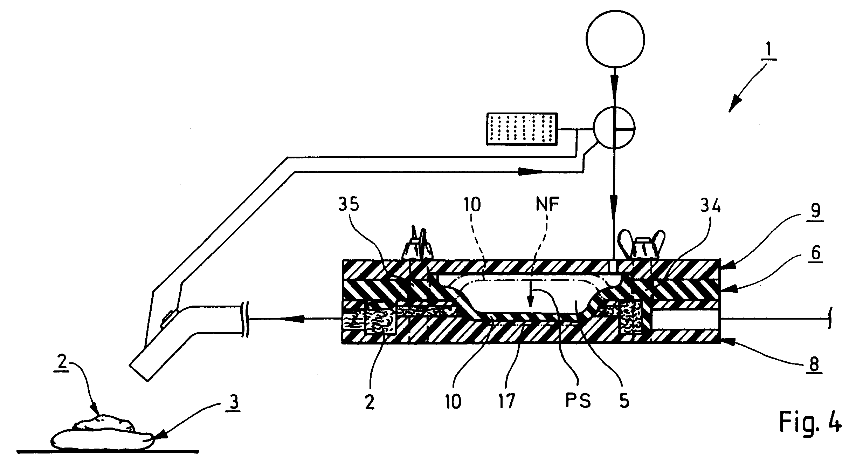

The dispensing means 6 is located between a first (lower) support means 8 and a second (upper) support means 9 and it includes preferably a longitudinal dispensing portion 10. This dispensing portion 10 has in normal shape NF (see fig. 2) preferably a concave cross section relative to the first support means 8, and it defines therewith the dispensing chamber 5. The dispensing portion 10 is by pressure application with said pressurized medium deformable from its concave normal shape in a direction towards the first support means 8 for conducting a dispensing stroke (see arrow PS in fig. 4) in a direction into the dispensing chamber 5. The length of this dispensing stroke PS is limited by the first support means 8 and when said stroke PS is completed, the dispensing portion 10 has dispensed a predetermined amount of free-flowing material 2 from the dispensing chamber 5.

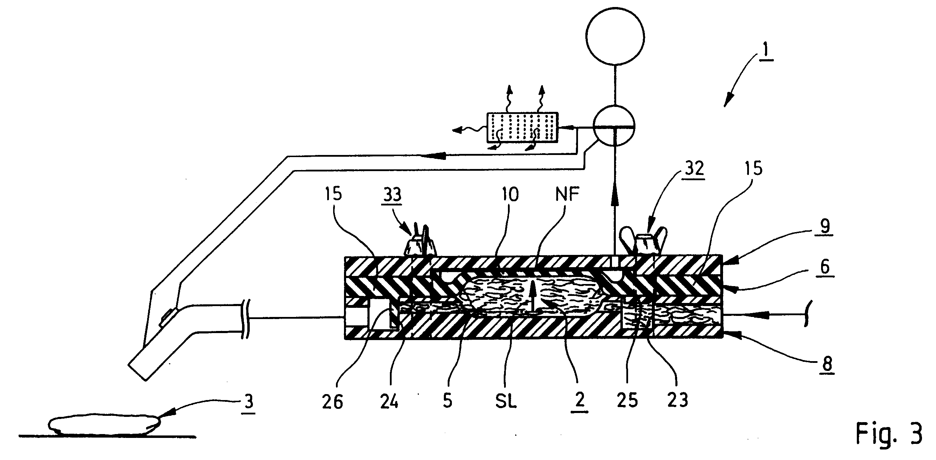

The dispensing portion 10 has such shape and elasticity that said portion, by resuming its normal shape NF when the pressure application ceases, by itself is capable of carrying out such a sucking stroke (see arrow SL in fig. 3) that new free-flowing material 2 is sucked into the dispensing chamber 5 for subsequent dispensing.

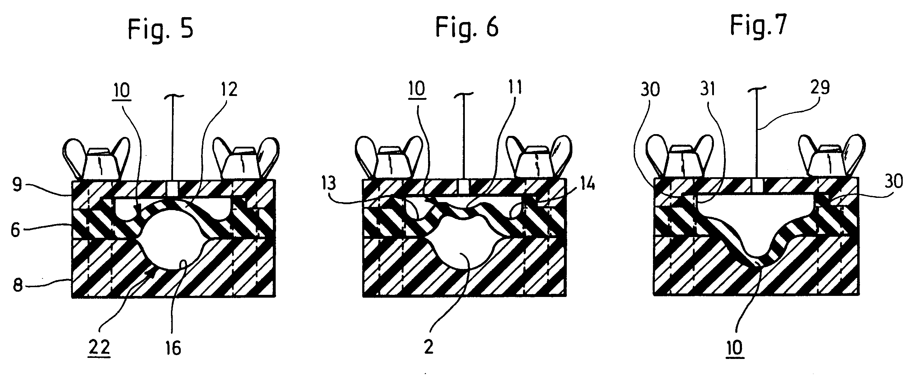

The dispensing portion 10 of the dispensing means 6 has preferably such a wave form, that said portion, at pressure application in the beginning of a dispensing stroke PS, starts to deform first at such central parts 11 (see fig. 6) which form the top 12 of said dispensing portion. Thereafter, the dispensing portion 10 successively deforms in a direction outwards from said central parts 11 towards outer parts 13, 14 of said dispensing portion 10 until its dispensing stroke PS is completed.

The wall thickness of the central parts 11 of the dispensing portion 10 are preferably increasing successively in outwards direction towards the outer parts 13, 14, whereby it is facilitated that said central parts 11 first start to deform at pressure application on said dispensing portion 10.

The outer parts 13, 14 of the dispensing portion 10 transform into sealing portions 15 which extend around said dispensing portion 10 and the opposite sides of which are sealingly engaged by the support means 8, 9.

The sealing portions 15 preferably define a seal between the support means 8, 9 and/or tight caps for such passages for pressurized medium and/or for free-flowing material 2 which form part of said support means 8, 9.

The dispensing portion 10 and the sealing portions 15 extending therearound are preferably designed as a unit of elastic material, e.g. rubber material, preferably of silicone rubber type.

The dispensing portion 10 and/or such support members 16 of the first support means 8 against which said dispensing portion 10 can rest, is/are mounted such that a pocket or pockets 17 (see dashed and dotted lines in fig. 4) for free-flowing material 2 is/are defined between said dispensing portion 10 and said first support means 8 when said dispensing portion 10 is situated in an outer position wherein its dispensing stroke PS is limited. Such a pocket 17 can extend along e.g. the entire dispensing chamber 5 or along only portions thereof.

The first support means 8 is preferably designed as a rigid channel plate with one or more channels or passages 18, 19 for free-flowing material 2 and that the second support means 9 is designed preferably as a rigid channel plate with one or more channels or passages 20, 21 for pressurized medium.

The first support means 8 is preferably provided with a recess 22 which is located just opposite the dispensing portion 10. This recess 22 is adapted to define the dispensing chamber 5 together with said dispensing portion 10. The wall portions of said recess 22 preferably define the support members 16 for the dispensing portion 10.

The passage 18 of the first support means 8 preferably defines an inlet passage for feeding free-flowing material 2 to the dispensing chamber 5 and the passage 19 preferably defines an outlet passage for feeding free-flowing material 2 from said dispensing chamber 5.

In the first support means 8 there are also preferably provided two valve seats 23, 24 for two valve bodies 25, 26. The valve body 25 is adapted to prevent free-flowing material 2 from being discharged in the wrong direction from said dispensing chamber 5 during dispensing. The valve body 26 is adapted to prevent air from being sucked into said dispensing chamber 5 through a dispensing nozzle 27 during the suction stroke of the dispensing portion 10. The valve bodies 25, 26 preferably consist of tongues of elastic material which extend from the dispensing means 6 and which preferably are made integral therewith and of the same material.

The second support means 9 is designed as a channel plate for pressurized medium, wherein the passage 21 can define a space in which the dispensing portion 10 can assume normal shape NF. A source 28 of pressurized medium, e.g. a source of compressed air, is connected with said space 21 through a conduit 29 for applying pressure on the dispensing portion 10. The space 21 preferably has edge portions 30 which a sealing ridge 31 extending around said dispensing portion 10 is adapted to sealingly engage. The sealing ridge 31 is preferably made of an elastic material, extends from the dispensing means 6 and is preferably made integral therewith and of the same material.

The support means 8, 9 and the dispensing means 6 located therebetween together preferably define a sandwich-like unit which is kept tight or clamped by one or more clamping means 32, 33, e.g. bolts with wing nuts.

Clamping limiting means 34, 35 are provided preferably to ensure that the sealing portions 15 of the dispensing means 6 can be tightened only to a certain least thickness by means of the clamping means 32, 33.

As is apparent from the figures, each support means 8, 9 consists preferably of a single unit. Also the dispensing means 6, the dispensing portion 10 thereof and eventual valve bodies 25, 26 therein preferably consist of a single unit, all through preferably of the same material. The clamping means 32, 33 for tightening or clamping said units together are preferably quickly disconnectable such that said units quickly can be demounted into three separate parts for cleaning.

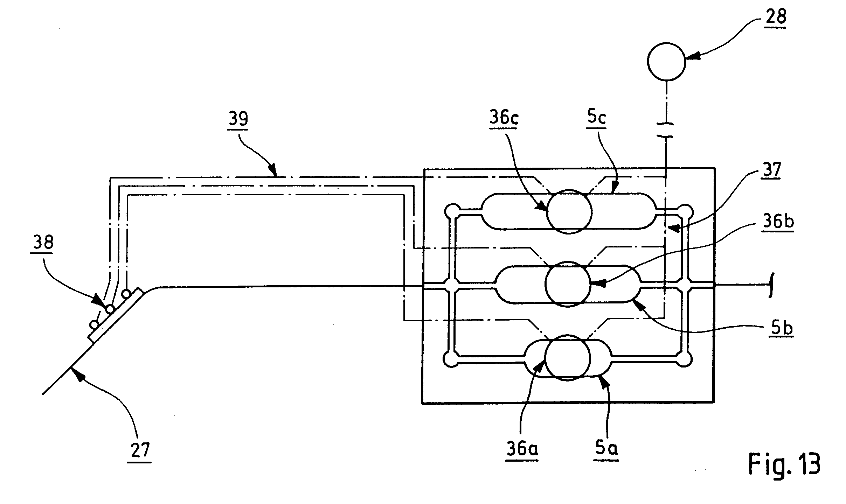

As is shown in fig. 13, the dispensing device 1 may comprise three dispensing portions 10 which cooperate with dispensing chambers 5a, 5b, 5c of various sizes. Each dispensing portion 10 cooperates with a pressurized-medium-operated and remote-controlled operating valve 36a, 36b, 36c which permits application of a pressure on one of the three dispensing portions 10. Hereby, the dispensing device 1 can be used for dispensing portions 7 of three different sizes. The operating valves 36a, 36b, 36c are through conduits 37 connected with the source 28 of pressurized medium and they can be remotely controlled by means of push buttons 38 which are provided on the dispensing nozzle 27 and connected with the operating valves 36a, 36b, 36c through conduits 39.

To bring such free-flowing material 2 to release what is left on the dispensing nozzle 27, pressurized medium from the source 28 thereof is used. This is done by feeding pressurized medium to the dispensing nozzle 27 through a conduit 40. Said conduit 40 is connected with a conduit branch 41 which connects a three way valve 42 (which is located in the conduit 29 between the source 28 of pressurized medium and the space 21) to a pressurized-medium outlet 43 (which is preferably provided with sound dampers) having such a restriction that a portion of the pressurized medium is brought to flow to the dispensing nozzle 27 when the operating valve 42 is opened for exiting or discharging pressurized medium through said outlet 43 when the dispensing portion 10 is operated to conduct its suction stroke SL.

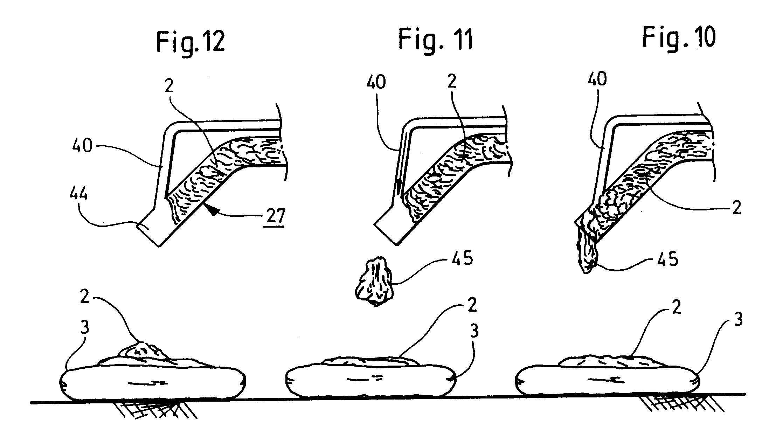

The pressure blow thus generated in the dispensing nozzle 27, forces eventual residuals 45 of the free-flowing material 2 remaining at the mouth 44 of the nozzle 27 to let go from said nozzle such that no such residuals 45 find their way from the mouth 44 (see figs. 10-12).

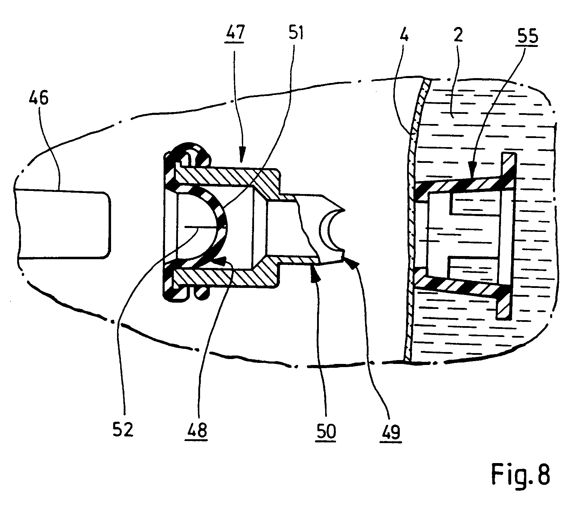

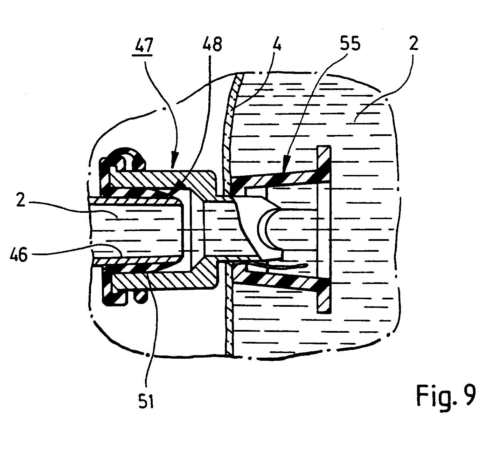

A conduit 46 is connected with the dispensing chamber 5 and through a coupling unit 47 (see figs. 8 and 9) preferably connectable with the package 4 with free-flowing material 2. This coupling unit 47 comprises a valve 48 which in normal shape closes said coupling unit 47 such that free-flowing material is prevented from flowing therethrough.

The coupling unit 47 further comprises a break portion 49 and a coupling portion 50, whereby said break portion 49 is adapted to permit breaking up of the package 4 and said coupling portion 50 adapted to permit connection of said coupling unit 47 with said package 4.

Additionally, the valve 48 of the coupling unit 47 can be opened by means of the conduit 46 connected with the dispensing chamber 5, such that free-flowing material 2 can flow from the package 4 and through said coupling unit 47 into said conduit 46 when said unit 47 is connected with said package 4 and said conduit 46 is connected with said coupling unit 47.

The valve 48 comprises a normally semi-spherical valve body 51 of elastic material. This semi-spherical valve body 51 is slotted, preferably by means of crosslaid cuts 52, whereby the cuts 52 defined by the slotting are closed when said valve body 51 is in its normal shape.

The valve body 51 can be opened by pressing the conduit 46 into said valve body 51 such that said cuts 52 open, whereby said valve 48 is mounted such that the parts thereof, by means of said conduit 46, can fold back completely from the flow path of the free-flowing material 2 through the coupling unit 47.

The package 4 is preferably provided on a stand 53 which along with said package 4 can be placed in a position lying down on an underlayer 54 such that a coupling member 55 provided in said package 4 can rest on said underlayer 54 when the coupling unit 47 is pressed through the wall of the package 4 for connection therewith.

It should also be mentioned that the operating valve 42 can be remote-controlled by means of a push botton 56 on the dispensing nozzle 27 and the control signal to said operating valve 42 can be transferred through a conduit 57.

The invention described above and shown in the drawings can vary in shape and function within the limits set by the subsequent claims. As examples of alternative embodiments it could be mentioned that the dispensing portion 10 can carry out the function described also if said portion has another shape than what is described above, all passages in the support means 8, 9 can be open towards the sealing portions 15 which in that case define tight caps for said passages. Finally, it should be mentioned that the clamping limiting means 34, 35 can be sleeves which are sufficiently high and threaded on bolts which may form part of the clamping means 32, 33.

## Claims

1. Dispensing device (1) for dispensing a predetermined portion of free-flowing material (2) at each time of dispensing,
whereby the free-flowing material (2) preferably consists of free-flowing foodstuff, e.g. viscous foodstuff which preferably is to be dispensed on dishes (3), e.g. hamburgers,
whereby the dispensing or portioning effect is achieved by means of a liquid or gaseous pressurized medium, preferably compressed air, and
whereby the dispensing portion (10) has such a shape and elasticity that said portion, by resuming its normal shape (NF) when the pressure application has ceased, by itself is capable of sucking fresh free-flowing material (2) into the dispensing chamber (5) for subsequent dispensing,
**characterized in** that the wall thickness of central parts (11) of the dispensing portion (10) are increasing successively in outwards direction towards outer parts (13, 14) of said dispensing portion (10), whereby said central parts (11) first start to deform at pressure application on said dispensing portion (10).

2. Dispensing device according to claim 1, **characterized in** that the dispensing portion (10) of the dispensing means (6) has such a wave form that said portion, at pressure application in the beginning of a dispensing stroke (PS), starts to deform first at such central parts (11) which form the top (12) of said dispensing portion (10), and deforms thereafter successively in a direction outwards from said central parts (11) towards outer parts (13, 14) of said dispensing portion (10) until its dispensing stroke (PS) is completed.

3. Dispensing device according to claim 1 or 2, **characterized in** that it comprises a dispensing means (6) which is provided between a first and a second support means (8, 9) which closely engage said dispensing means (6) around a dispensing portion (10) forming part thereof.

4. Dispensing device according to claim 3, **characterized in** that the dispensing portion (10) has a concave normal shape (NF) relative to the first support means (8) and defines wherewith a dispensing chamber (5) for the free-flowing material (2), and that the dispensing portion (10) by pressure application with the pressurized medium is workable in a direction towards the first support means (8) for conducting a dispensing stroke (PS), the length of which is limited by said first support means and which causes dispensing of material present in the dispensing chamber (5).

5. Dispensing device according to any of claims 2 - 4, **characterized in** that the dispensing portion (10) has outer parts (13, 14) which transform into sealing portions (15) which extend around said dispensing portion (10) and the opposite sides of which are sealingly engaged by the support means (8, 9).

6. Dispensing device according to claim 5, **characterized in** that the sealing portions (15) define a seal between the support means (8, 9) and/or tight caps for such passages for pressurized medium and/or for free-flowing material (2) which form part of said support means (8, 9).

7. Dispensing device according to any preceding claim, **characterized in** that the dispensing portion (10) is designed as an elongated portion with a waved cross-section.

8. Dispensing device according to any preceding claim, **characterized in** that the dispensing portion (10) and the sealing portions (15) extending therearound are designed as a unit of elastic material, e.g. rubber material, preferably of silicone rubber type.

9. Dispensing device according to any of claims 2 - 6, **characterized in** that the dispensing portion (10) and/or such support members (16) of the first support means (8) against which said dispensing portion (10) can rest, is/are mounted such that a pocket or pockets (17) for free-flowing material (2) is/are defined between said dispensing portion (10) and said first support means (8) when said dispensing portion (10) is situated in an outer position wherein its dispensing stroke (PS) is limited.

10. Dispensing device according to claim 9, **characterized in** that a pocket (17) extends along the entire dispensing chamber (5).

11. Dispensing device according to any of claims 2-6,9-10, **characterized in** that the first support means (8) is designed as a rigid channel plate with one or more channels or passages (18, 19) for free-flowing material (2) and that the second support means (9) is designed as a rigid channel plate with one or more channels or passages (20, 21) for pressurized medium.

12. Dispensing device according to any of claims 2-6,9-11, **characterized in** that the first support means (8) is provided with a recess (22) which is located just opposite the dispensing portion (10), that said recess (22) is adapted to define the dispensing chamber (5) together with said dispensing portion (10) and that wall portions of said recess (22) are adapted to define support members (16) for limiting the dispensing stroke (PS) of said dispensing portion (10).

13. Dispensing device according to any of claims 2-6,9-12, **characterized in** that the first support means (8) has an inlet passage (18) for feeding free-flowing material (2) to the dispensing chamber (5) and an outlet passage (19) for feeding free-flowing material (2) from said dispensing chamber (5) and that in said first support means (8) there are provided valve seats (23, 24) for valve bodies (25, 26), of which one valve body (25) is adapted to prevent free-flowing material (2) from being discharged in the wrong direction from said dispensing chamber (5) while the other valve body (26) is adapted to prevent air from being sucked into said dispensing chamber (5) through a dispensing nozzle (27).

14. Dispensing device according to claim 13, **characterized in** that the valve bodies (25, 26) consist of tongues of elastic material which extend from the dispensing means (6) and which preferably are made integral therewith and of the same material.

15. Dispensing device according to any of claims 2-6, 9-14, **characterized in** that the second support means (9) is designed as a channel plate for pressurized medium, whereby said channel plate is provided with a space (21) wherein the dispensing portion (10) can assume normal shape (NF), that a source (28) of pressurized medium is connected with said space (21) for applying pressure on said dispensing portion (10) and that said space (21) has edge portions (30) which a sealing ridge (31) extending around said dispensing portion (10) is adapted to sealingly engage.

16. Dispensing device according to claim 15, **characterized in** that the sealing ridge (31) is made of an elastic material, extends from the dispensing means (6) and is preferably made integral therewith and of the same material.

17. Dispensing device according to any preceding claim, **characterized in** that the dispensing means (6) around the dispensing portion (10) is located between support means (8, 9) and defines sealing portions (15) which engage said support means (8, 9), whereby the support means (8, 9) and the dispensing means (6) therebetween together define a sandwich-like unit which is kept tight or clamped by clamping means (32, 33).

18. Dispensing device according to claim 17, **characterized in** that the sealing portions (15) of the dispensing means (6) define a seal between the support means (8, 9) and caps for passages (18, 19, 20, 21) for free-flowing material (2) and/or pressurized medium in said support means (8, 9).

19. Dispensing device according to claim 17 or 18, **characterized by** clamping limiting means (34, 35) which ensure that the sealing portions (15) of the dispensing means (6) can be tightened only to a certain least thickness by means of the clamping means (32, 33).

20. Dispensing device according to any of claims 17-19, **characterized in** that each support means (8, 9) consists of a single unit and that the dispensing means (6), the dispensing portion (10) thereof and eventual valve bodies (25, 26) therein consist of a single unit, all through preferably of the same material, and that clamping means (32, 33) for tightening or clamping said units together are quickly disconnectable such that said units quickly can be demounted into three separate parts for cleaning.

21. Dispensing device according to any preceding claim, **characterized in** that the dispensing device (1) comprises at least two dispensing portions (10) of which one cooperates with a dispensing chamber (5a) of a certain size and the other with a dispensing chamber (5b) of another size, and that each dispensing portion (10) cooperates with a remote-controlled hand or operating valve (36a, 36b) which permits application of a pressure on the selected dispensing portion (10) such that free-flowing material (2) is dispensed from the selected dispensing chamber (5a or 5b).

22. Dispensing device according to any preceding claim, **characterized in** that a conduit (40) for pressurized medium is connected with a dispensing nozzle (27) for dispensing free-flowing matrial (2) from the dispensing chamber (5), which conduit (40) is adapted to feed pressurized medium into the dispensing nozzle (27) such that after dispensing, eventual residuals of material remaining at the mouth (44) of the dispensing nozzle (27) are forced to let go from said dispensing nozzle (27) by means of a blow of pressurized medium.

23. Dispensing device according to claim 22, **characterized in** that the conduit (40) for feeding pressurized medium to the dispensing nozzle (27) is connected with a conduit branch (41) to a pressurized-medium outlet (43) which is adapted to discharge pressurized medium such that the dispensing portion (10) can resume its normal shape (NF), whereby said pressurized-medium outlet (43) is provided with such a restriction for exiting pressurized medium that a portion of said exiting pressurized medium flows through said conduit (40) to said dispensing nozzle (27) and provides a pressure blow therein.

24. Dispensing device according to any preceding claim, **characterized in** that a conduit (46) is connected with the dispensing chamber (5) and through a coupling unit (47) connectable with a package (4) with free-flowing material (2), that the coupling unit (47) comprises a valve (48) which in normal shape closes said coupling unit (47) such that free-flowing material is prevented from flowing therethrough, that the coupling unit (47) further comprises a break portion (49) and a coupling portion (50), whereby said break portion (49) is adapted to permit breaking up of the package (4) and said coupling portion (50) adapted to permit connection of said coupling unit (47) with said package (4), and that the valve (48) of the coupling unit (47) can be opened by means of the conduit (46) connected with the dispensing chamber (5), such that free-flowing material (2) can flow from the package (4) and through said coupling unit (47) when it is connected with said package (4) and said conduit (46) to said dispensing chamber (5) is connected with said coupling unit (47).

25. Dispensing device according to claim 24, **characterized in** that the valve (48) comprises a normally semi-spherical valve body (51) of elastic material, that said semi-spherical valve body (51) is slotted, preferably by means of crosslaid cuts (52), whereby the cuts (52) defined by the slotting are closed when said valve body (51) is in its normal semi-spherical shape, and said valve body (51) can be opened by means of the conduit (46) connected with the dispensing chamber (5) by pressing said conduit (46) into said valve body (51) such that said cuts (52) open, whereby said valve (48) is mounted such that the parts thereof, by means of said conduit (46), can fold back completely from the flow path of the free-flowing material (2) through the coupling unit (47).

26. Dispensing device according to any preceding claim, **characterized in** that a conduit (46) is connected with the dispensing chamber (5) and through a coupling unit (47) connectable with a package (4) with free-flowing material (2), and that the package (4) is provided on a stand (53) which along with said package (4) can be placed in a position lying down on an underlayer (54) such that a coupling member (55) provided in said package (4) can rest on said underlayer when the coupling unit (47) is connected with said package (4).

## Patentansprüche

1. Ausgabevorrichtung (1) zur Ausgabe einer vorgegebenen Menge flüssigen Materials (2) zum jeweiligen Ausgabezeitpunkt,
wobei das flüssige Material (2) vorzugsweise aus flüssigen Lebensmitteln besteht, z.B. zähflüssigen Lebensmitteln, die auf verschiedene Gerichte (3) - beispielsweise Hamburger - zu dosieren sind,
und wobei der Ausgabe- oder Dosiervorgang durch ein flüssiges oder gasförmiges Druckmedium - vorzugsweise Druckluft - bewirkt wird und
der Ausgabeabschnitt (10) eine solche Form und Elastizität hat, daß er durch das Annehmen seiner ursprünglichen Form (NF) nach Beendigung der Druckeinwirkung ein selbsttätiges Ansaugen des flüssigen Materials (2) in die Dosierkammer (5) zwecks anschließender Ausgabe bewirkt,
**gekennzeichnet dadurch**, daß die Wanddicke der zentralen Teile (11) des Ausgabeabschnitts (10) nach außen in Richtung der äußeren Teile (13, 14) des Ausgabeabschnitts (10) sukzessive zunimmt und diese zentralen Teile (11) daher erst nach Druckbeaufschlagung des Ausgabeabschnitts (10) anfangen, sich zu verformen.

2. Ausgabevorrichtung gemäß Patentanspruch 1, **gekennzeichnet dadurch**, daß der Ausgabeabschnitt (10) des Ausgabeorgans (6) wellenförmig ist und sich somit bei Druckbeaufschlagung zu Beginn eines Dosierhubs (PS) zuerst an den zentralen Teilen (11) verformt, die dann den oberen Teil (12) des Ausgabeabschnitts (10) bilden, wobei dann bis zum Ende des Ausgabehubs (PS) sukzessive eine weitere Verformung des Ausgabeabschnitts (10) stattfindet, und zwar nach außen gerichtet von den zentralen Teilen (11) zu den äußeren Teilen (13, 14).

3. Ausgabevorrichtung gemäß Patentanspruch 1 oder 2, **gekennzeichnet dadurch**, daß dieselbe ein Ausgabeorgan (6) am Ausgabeabschnitt (10) umfaßt, das von einem ersten und zweiten Stützelement (8 bzw. 9) umschlossen wird und einen Teil dieses Ausgabeabschnitts bildet.

4. Ausgabevorrichtung gemäß Patentanspruch 3, **gekennzeichnet dadurch**, daß der Ausgabeabschnitt (10) in seiner ursprünglichen Form (NF) im Hinblick auf das Stützelement 8 konkav ist und somit eine Dosierkammer (5) für das flüssige Material (2) bildet, wobei der Ausgabeabschnitt durch das Druckmedium in Richtung zum ersten Stützelement (8) so beaufschlagt werden kann, daß ein Dosierhub (PS) ausgeführt wird, dessen Hubweg durch besagtes Stützelement begrenzt wird und der die Ausgabe des in der Dosierkammer (5) vorhandenen Materials bewirkt.

5. Ausgabevorrichtung gemäß einem der Patentansprüche 2 - 4, **gekennzeichnet dadurch**, daß der Ausgabeabschnitt (10) äußere Teile (13, 14) umfaßt, die um besagten Ausgabeabschnitt (10) herum in Dichtungsabschnitte (15) übergehen, auf deren gegenüberliegender Seite die Stützelemente 8, 9 anliegen und abdichten.

6. Ausgabevorrichtung gemäß Patentanspruch 5, **gekennzeichnet dadurch**, daß die Dichtungsabschnitte (15) eine Dichtung zwischen den Stützelementen (8, 9) und/oder Verschlußelemente für Kanäle bilden, die in den Stützelementen (8, 9) für das Druckmedium und/oder das flüssige Material (2) vorhanden sind.

7. Ausgabevorrichtung gemäß einem der vorstehenden Patentansprüche, **gekennzeichnet dadurch**, daß der Ausgabeabschnitt (10) eine längliche Form und einen wellenförmigen Querschnitt hat.

8. Ausgabevorrichtung gemäß einem der vorstehenden Patentansprüche, **gekennzeichnet dadurch**, daß der Ausgabeabschnitt (10) und die an diesem verlaufenden Dichtungsabschnitte (15) als eine Einheit aus elastischen Material, z.B. Gummi - und hier vorzugsweise Silikongummi, ausgelegt sind.

9. Ausgabevorrichtung gemäß einem der Patentansprüche 2 - 6, **gekennzeichnet dadurch**, daß der Ausgabeabschnitt (10) und/oder die Stützglieder (16) des ersten Stützelements (8), auf denen der besagte Ausgabeabschnitt (10) ruhen kann, so angebracht ist/sind, daß ein Raum bzw. mehrere Räume (17) für das flüssige Material (2) zwischen besagtem Ausgabeabschnitt (10) und dem ersten Stützelement (8) entsteht/entstehen, wenn der Ausgabeabschnitt (10) die äußere Stellung einnimmt, in welcher der Dosierhub (PS) begrenzt wird.

10. Ausgabevorrichtung gemäß Patentanspruch 9, **gekennzeichnet dadurch**, daß sich ein Raum (17) entlang der gesamten Dosierkammer (5) erstreckt.

11. Ausgabevorrichtung gemäß einem der Patentansprüche 2 - 6 und 9 - 10, **gekennzeichnet dadurch**, daß das erste Stützelement (8) als starre Kanalplatte mit einem oder mehreren Kanälen oder Durchführungen (18, 19) für das flüssige Material (2) ausgeführt ist und das zweite Stützelement (9) als starre Kanalplatte mit einem oder mehreren Kanälen oder Durchführungen (20, 21) für das Druckmedium.

12. Ausgabevorrichtung gemäß einem der Patentansprüche 2 - 6 und 9 - 11, **gekennzeichnet dadurch**, daß das erste Stützelement (8) mit einer Aussparung (22) versehen ist, die dem Ausgabeabschnitt direkt gegenüber liegt und in Verbindung mit dem Ausgabeabschnitt (10) die Dosierkammer (5) umschreibt, wobei die Wandabschnitte der besagten Aussparung (22) so ausgebildet sind, daß sie Stützglieder (16) zur Begrenzung des Dosierhubs (PS) im Ausgabeabschnitt (10) bilden.

13. Ausgabevorrichtung gemäß einem der Patentansprüche 2 - 6 und 9 - 12, **gekennzeichnet dadurch**, daß das erste Stützelement (8) einen Einlaßkanal (18) für die Weiterleitung des flüssigen Materials (2) zur Dosierkammer (5) und einen Auslaßkanal (19) zur Ableitung des flüssigen Materials (2) aus der Dosierkammer (5) umfaßt, wobei sich im ersten Stützelement (8) Ventilsitze (23, 24) für Ventilkörper (25, 26) befinden, von denen einer (25) verhindern soll, daß das flüssige Material (2) aus der Dosierkammer (5) in die falsche Richtung geleitet wird, während der andere Ventilkörper (26) verhindern soll, daß durch eine Dosierdüse (27) Luft in die Dosierkammer (5) angesaugt wird.

14. Ausgabevorrichtung gemäß Patentanspruch 13, **gekennzeichnet dadurch**, daß die Ventilkörper (25, 26) in Form von Zungen aus elastischem Material ausgeführt sind, die vom Ausgabeorgan (6) ausgehen und vorzugsweise aus demselben Material wie letzteres bestehen und mit diesem integriert sind.

15. Ausgabevorrichtung gemäß einem der Patentansprüche 2 - 6 und 9 - 14, **gekennzeichnet dadurch**, daß das zweite Stützelement (9) als Kanalplatte für das Druckmedium ausgeführt ist, wobei diese Kanalplatte einen Raum (21) umfaßt, in dem der Ausgabeabschnitt (10) seine ursprüngliche Form (Normalform NF) annehmen kann, und wobei weiterhin ein Druckanschluß (28) mit diesem Raum (21) zur Druckbeaufschlagung des Ausgabeabschnitts (10) in Verbindung steht und dieser Raum (21) vorzugsweise Kantenabschnitte (30) umfaßt, gegen die ein um den Ausgabeabschnitt (10) verlaufender Dichtungswulst (31) abdichten kann.

16. Ausgabevorrichtung gemäß Patentanspruch 15, **gekennzeichnet dadurch**, daß der Dichtungswulst (31) aus elastischem Material ist, vom Ausgabeorgan (6) ausgeht und vorzugsweise aus demselben Material wie letzteres besteht und mit diesem integriert ist.

17. Ausgabevorrichtung gemäß einem der vorstehenden Patentansprüche, **gekennzeichnet dadurch**, daß das Ausgabeorgan (6) am Ausgabeabschnitt (10) zwischen Stützelementen (8, 9) liegt und Dichtungsabschnitte (15) bildet, welche diese Stützelemente (8, 9) beaufschlagen, wobei die Stützelemente (8, 9) mit dem Ausgabeorgan (6) eine Einheit in Sandwich-Bauweise bilden, die durch Spannvorrichtungen (32, 33) zusammengepreßt wird.

18. Ausgabevorrichtung gemäß Patentanspruch 17, **gekennzeichnet dadurch**, daß die Dichtungsabschnitte (15) des Ausgabeorgans (6) eine Abdichtung zwischen den Stützelementen (8, 9) und Verschlußkappen für die Durchführungen (18, 19, 20, 21) bilden, die für das flüssige Material (2) und/oder das Druckmedium in den Stützelementen (8, 9) vorgesehen sind.

19. Ausgabevorrichtung gemäß Patentanspruch 17 oder 18, **gekennzeichnet dadurch**, daß Begrenzungsorgane (34, 35) vorhanden sind, die sicherstellen, daß die Dichtungsabschnitte (15) des Ausgabeorgans (6) mit den Spannvorrichtungen (32, 33) nur bis auf eine bestimmte Mindestdicke zusammengepreßt werden können.

20. Ausgabevorrichtung gemäß einem der Patentansprüche 17 - 19, **gekennzeichnet dadurch**, daß jedes Stützelement (8, 9) aus einer Einheit besteht und das Ausgabeorgan (6) mit dem Ausgabeabschnitt (10) sowie eventuell darin vorhandenen Ventilkörpern (25, 26) ebenfalls eine Einheit bildet, und zwar vorzugsweise durchgehend aus dem gleichen Material, und weiterhin die Spannvorrichtungen (32, 33) zum Zusammenpressen der besagten Einheiten rasch freigegeben werden können, so daß dieselben leicht zwecks Reinigung in drei separate Teile zerlegt werden können.

21. Ausgabevorrichtung gemäß einem der vorstehenden Patentansprüche, **gekennzeichnet dadurch**, daß die Ausgabevorrichtung (1) mindestens zwei Ausgabeabschnitte (10) umfaßt, von denen einer mit einer Dosierkammer (5a) einer gewissen Größe und der andere mit einer Dosierkammer (5b) einer anderen Größe zusammenarbeitet, wobei jeder Ausgabeabschnitt (10) mit einem fernbedienten Steuerventil zusammenwirkt, wodurch eine Druckbeaufschlagung eines gewählten Ausgabeabschnitts (10) in solcher Weise ermöglicht wird, daß das flüssige Material (2) aus der gewählten Dosierkammer (5a oder 5b) abgegeben werden kann.

22. Ausgabevorrichtung gemäß einem der vorstehenden Patentansprüche, **gekennzeichnet dadurch**, daß eine Leitung (40) für das Druckmedium mit einer Dosierdüse (27) zur Ausgabe des flüssigen Materials (2) aus der Dosierkammer (5) in Verbindung steht, wobei diese Leitung (40) dazu dient, der Dosierdüse (27) nach dem Ausgabevorgang das Druckmedium so zuzuführen, daß die Dosierdüse (27) von eventuellen Materialrückständen an der Düsenöffnung (44) durch die Druckbeaufschlagung befreit wird.

23. Ausgabevorrichtung gemäß Patentanspruch 22, **gekennzeichnet dadurch**, daß die Leitung (40) zur Weiterbeförderung des Druckmediums zur Dosierdüse (27) mit einer Zweigleitung (41) verbunden ist, die zu einem Auslaß (43) für das Druckmedium führt, wodurch ein Druckabbau ermöglicht wird und somit der Ausgabeabschnitt (10) seine ursprüngliche Form (Normalform NF) wieder annehmen kann, wobei dieser Auslaß (43) mit einer Drosselung versehen ist, die bewirkt, daß ein Teil des abgegebenen Druckmediums über die besagte Leitung (40) zur Dosierdüse (27) gelangt und diese mit Druck beaufschlagt.

24. Ausgabevorrichtung gemäß einem der vorstehenden Patentansprüche, **gekennzeichnet dadurch**, daß eine Leitung (46) mit der Dosierkammer (5) in Verbindung steht, wobei erstere - vorzugsweise über eine Kupplungseinheit (47) - mit einem das flüssige Material (2) enthaltenden Paket (4) verbunden werden kann, wobei die Kupplungseinheit (47) ein Ventil (48) umfaßt, das in Normalstellung die Kupplungseinheit so verschließt, daß das flüssige Material nicht hindurchfließen kann, und wobei weiterhin die Kupplungseinheit (47) einen zum Öffnen des Pakets vorgesehenen Öffnungsabschnitt (49) und einen zur Herstellung der Verbindung zwischen Kupplungseinheit und Paket vorgesehenen Kupplungsabschnitt (50) umfaßt und das Ventil (48) der Kupplungseinheit (47) über die mit der Dosierkammer (5) in Verbindung stehende Leitung (46) geöffnet werden kann, wonach das flüssige Material (2) vom Paket (4) aus über die besagte Kupplungseinheit (47), wenn diese mit dem Paket verbunden ist, und die Leitung (46), wenn diese mit der Kupplungseinheit verbunden ist, in die Dosierkammer (5) strömen kann.

25. Ausgabevorrichtung gemäß Patentanspruch 24, **gekennzeichnet dadurch**, daß das Ventil (48) einen normalerweise halbkugelförmigen Ventilkörper (51) aus elastischem Material umfaßt und dieser Ventilkörper (51) vorzugsweise über Kreuz liegende Schlitze (52) aufweist, wobei diese Schlitze (52) geschlossen sind, wenn der Ventilkörper seine normale Halbkugelform hat, und wobei weiterhin der besagte Ventilkörper (51) dadurch in offene Stellung gebracht werden kann, daß die mit der Dosierkammer (5) verbundene Leitung (46) in diesen Ventilkörper so hineingedrückt wird, daß sich die Schlitze (52) öffnen, und das Ventil (48) weiterhin so angeordnet ist, daß sich die Ventilteile mit Hilfe der Leitung (46) völlig aus dem Strömungspfad des flüssigen Materials (2) über die Kupplungseinheit (47) wegklappen lassen.

26. Ausgabevorrichtung gemäß einem der vorstehenden Patentansprüche, **gekennzeichnet dadurch**, daß eine Leitung (46) mit der Dosierkammer (5) in Verbindung steht, wobei erstere über eine Kupplungseinheit (47) mit einem das flüssige Material (2) enthaltenden Paket (4) verbunden werden kann, und wobei das Paket (5) auf einem Gestell (53) angeordnet wird, das mit dem Paket (4) auf eine Unterlage (54) gelegt werden kann, und zwar so, daß ein Kupplungselement (54) im Paket (4) auf dieser Unterlage ruhen kann, wenn die Kupplungseinheit (47) mit dem Paket (4) verbunden wird.

## Revendications

1. Dispositif de distribution (1) conçu pour délivrer une portion prédéterminée de matière liquide (2) à chaque occasion de distribution,
la matière liquide (2) est de préférence un aliment liquide, par exemple un produit alimentaire à écoulement lent susceptible d'être distribué sur une assiette de plat alimentaire (3), par exemple un hamburger,
la délivrance est obtenue sous pression, par exemple un gaz ou un liquide, de préférence de l'air comprimé,
la partie de distribution (10) est d'une forme et d'une élasticité telles que, en revenant à sa forme initiale (NF) en fin d'application de la pression, elle aspire à nouveau de la matière liquide (2) dans le compartiment (5) pour distribution ultérieure,
**dont la caractéristique est** que l'épaisseur de paroi des parties centrales (11) de la partie de distribution (10) augmente progressivement en direction de l'extérieur et des pièces extérieures (13, 14) de ladite partie de distribution, les pièces centrales ne changent de forme que sous l'effet de la mise sous pression de la partie de distribution (10).

2. Dispositif de distribution conforme à la revendication 1, **dont la caractéristique est** que la partie de distribution (10) de l'organe de distribution (6) est d'une forme ondulée telle que, au début du cordon délivré (CD), ce second commence à changer de forme dès la mise sous pression et seulement aux parties centrales (11) qui forment le sommet (12) de la partie de distribution (10), il change ensuite progressivement de forme en direction de l'extérieur, à partir des parties centrales (11) vers les parties extérieures (13, 14) de la partie de distribution (10) jusqu'en fin de cordon délivré (CD).

3. Dispositif de distribution conforme à la revendication 1 ou 2, **dont la caractéristique est** qu'il comporte un organe de distribution (6) qui est installé entre un premier et un second appui (8, 9), tous deux plaqués hermétiquement contre l'organe de distribution (6) autour d'une partie de distribution (10) qui en fait partie.

4. Dispositif de distribution conforme à la revendication 3, **dont la caractéristique est** qu'une partie de distribution (10) présente une forme normale concave (FN) par rapport à l'appui (8) et forme une chambre de distribution (5) avec le premier appui (8) pour matières liquides (2), la partie de distribution (10), mise sous pression par le produit déjà cité, se déforme en direction du premier appui (8) pour créer un cordon délivré (CD) dont la taille est limitée par le premier appui (8) et celui-ci provoque la délivrance de la matière (2) présente dans la chambre de distribution (5).

5. Dispositif de distribution conforme à l'une des revendications 2-4, **dont la caractéristique est** que la partie de distribution (10) présente des pièces externes (13, 14) qui font office de plans de joint (15) qui se dilatent autour de la partie de distribution (10), les faces opposées de celle-ci sont appliquées hermétiquement contre les appuis (8, 9).

6. Dispositif de distribution conforme à la revendication 5, **dont la caractéristique est** que les plans de joint (15) créent l'étanchéité entre les appuis (8, 9) et/ou des capuchons hermétiques pour les canalisations du produit sous pression et/ou pour la matière liquide (2) qui font partie des appuis (8, 9).

7. Dispositif de distribution conforme à l'une des revendications précédentes, **dont la caractéristique est** que la partie de distribution (10) a une forme allongée et une section ondulée.

8. Dispositif de distribution conforme à l'une des revendications précédentes, **dont la caractéristique est** que la partie de distribution (10) et les plans de joint (15) qui l'entourent forment une unité en une matière élastique, par exemple en caoutchouc, de préférence du type au silicone.

9. Dispositif de distribution conforme à l'une des revendications 2-6, **dont la caractéristique est** que la partie de distribution (10) et/ou les appuis (16) du premier appui (8), contre lesquels la partie de distribution (10) peut s'appuyer, est/sont de forme telle qu'il se forme une cavité ou des poches (17) pour la matière liquide (2) entre la partie de distribution (10) et le premier appui (8) quand la partie de distribution (10) se trouve dans une position externe qui limite le cordon délivré (CD).

10. Dispositif de distribution conforme à la revendication 9, **dont la caractéristique est** qu'une poche (17) s'étend le long de toute la chambre de distribution (5).

11. Dispositif de distribution conforme à l'une des revendications 2-6, 9-10, **dont la caractéristique est** que le premier appui (8) a la forme d'une plaque cannelée rigide à une ou plusieurs cannelures (18, 19) pour la matière liquide (2) et que le second appui (9) est une plaque cannelée rigide à une ou plusieurs cannelures ou gorges (20, 21) pour le passage du produit sous pression.

12. Dispositif de distribution conforme à l'une des revendications 2-6, 9-11, **dont la caractéristique est** que le premier appui (8) présente un creux (22) qui est placé juste en face de la partie de distribution (10), le creux (22) est adapté pour définir la chambre de distribution (5) avec la partie de distribution (10) et les parois de ce creux (22) sont adaptées pour définir les appuis (16) qui limitent le cordon délivré (CD) de la partie de distribution (10).

13. Dispositif de distribution conforme à l'une des revendications 2-6, 9-12, **dont la caractéristique est** que le premier appui (8) comporte un conduit d'admission (18) de la matière liquide (2) depuis la chambre de distribution (5) et un conduit de sortie (19) pour évacuer la matière liquide (2) de la chambre de distribution (5), le premier appui (8) comporte des sièges de soupapes (23, 24) pour les corps de soupapes (25, 26) dont l'un (25) est conçu pour éviter que de la matière liquide (2) ne sorte dans la mauvaise direction de la chambre de distribution (5) tandis que l'autre corps de soupape (26) sert à empêcher l'aspiration d'air dans la chambre de distribution (5) en passant par une buse de distribution (27).

14. Dispositif de distribution conforme à la revendication 13, **dont la caractéristique est** que les corps de soupapes (25, 26) consistent en des languettes d'un matériau élastique qui partent de l'organe de distribution (6) et qui de préférence sont en une seule pièce et dans le même matériau que celui-ci.

15. Dispositif de distribution conforme à l'une des revendications 2-6, 9-14, **dont la caractéristique est** que le second appui (9) est conçu comme une plaque cannelée pour le produit sous pression, cette plaque étant munie d'un espace (21) dans lequel la partie de distribution (10) peut prendre la forme normale (FN), la source (28) de produit sous pression est reliée à l'espace (21) de mise sous pression de la partie de distribution (10) et l'espace (21) comporte des angles (30) contre lesquels s'applique un joint (31) qui s'applique autour de la partie de distribution (10) pour créer l'étanchéité.

16. Dispositif de distribution conforme à la revendication 15, **dont la caractéristique est** que le joint (31) consiste en une matière élastique, sort de l'organe de distribution (6) et qu'il est fabriqué en une seule pièce de la même matière.

17. Dispositif de distribution conforme à l'une des revendications précédentes, **dont la caractéristique est** que l'organe de distribution (6), autour de la partie de distribution (10), est placé entre les appuis (8, 9) et forme des plans de joint (15) avec les appuis (8, 9), il se forme une "unité-sandwich" entre les appuis (8, 9) et l'organe de distribution (6) qui est maintenue par les dispositifs de serrage (32, 33).

18. Dispositif de distribution conforme à la revendication 17, **dont la caractéristique est** que les plans de joint (15) de l'organe de distribution (6) créent l'étanchéité entre les appuis (8, 9) et les capuchons des passages (18, 19, 20, 21), placés dans les appuis (8, 9), pour la matière liquide (2) et/ou le produit sous pression.

19. Dispositif de distribution conforme à la revendication 17 ou 18, **dont la caractéristique est** que les limiteurs de serrage (34, 35) qui veillent à ce que les plans de joint (15) de l'organe de distribution (6) ne peuvent être serrés que jusqu'à une certaine épaisseur minimale au moyen des dispositifs de serrage (32, 33).

20. Dispositif de distribution conforme aux revendications 17-19, **dont la caractéristique est** que chaque appui (8, 9) consiste en une seule unité et que l'organe de distribution (6), la partie de distribution (10) qui en fait partie et éventuellement les corps de soupape (25, 26) placés à l'intérieur consistent en une seule unité, de préférence dans une même matière, et que les dispositifs de serrage (32, 33) de ces unités sont à desserrage rapide de manière à pouvoir démonter rapidement ces unités en trois éléments distincts pour nettoyage.

21. Dispositif de distribution conforme à l'une des revendications précédentes, **dont la caractéristique est** que le dispositif de distribution (1) comprend au moins deux parties de distribution (10) dont l'une opère avec une chambre de distribution (5a) d'une certaine taille et l'autre avec une chambre de distribution (5b) d'une autre taille et que chaque partie de distribution (10) fonctionne avec une valve télécommandée (36a, 36b) de commande qui autorise l'application d'une pression sur la partie de distribution (10) sélectionnée, de sorte que la matière liquide (2) est délivrée depuis la chambre de distribution (5a ou 5b).

22. Dispositif de distribution conforme à l'une des revendications précédentes, **dont la caractéristique est** qu'un conduit (40) du produit sous pression est connecté à une buse de distribution (27) pour distribuer la matière liquide (2) depuis la chambre de distribution (5), le conduit (40) est conçu pour convoyer le produit sous pression vers la buse de distribution (27) de sorte que, après distribution, les éventuels résidus de matière situés dans l'orifice (44) de la buse de distribution (27) soient évacués sous pression de la buse de distribution (27).

23. Dispositif de distribution conforme à la revendication 22, **dont la caractéristique est** que le conduit (40) de convoyage du produit sous pression vers la buse de distribution (27) est connecté à une dérivation (41) et à une sortie pour le produit sous pression (43) qui est prévue pour laisser s'échapper du produit sous pression de sorte que la partie de distribution (10) puisse reprendre sa forme normale (FN), et que la sortie du produit sous pression (43) présente un étranglement pour évacuer le produit sous pression tel qu'une portion du produit sous pression s'échappe par le conduit (40) vers la buse de distribution (27), provoquant ainsi un souffle sous pression.

24. Dispositif de distribution conforme à l'une des revendications précédentes, **dont la caractéristique est** qu'un conduit (46), raccordé à la chambre de distribution (5), peut être relié, par l'intermédiaire d'un accouplement (47), à un emballage (4) de matière liquide (2),le raccord (47) possède une valve (48) qui dans sa forme normale referme l'accouplement (47) de sorte que la matière liquide (2) ne puisse pas s'échapper par celui-ci, l'accouplement (47) présente une partie pénétrante (49) et une partie de liaison (50), la partie pénétrante (49) permet le passage à travers l'emballage (4) et la partie de liaison (50) permet le raccord avec l'accouplement (47) via le joint (4), la valve (48) de l'accouplement (47) peut être ouverte au moyen du conduit (46) raccordé à la chambre de distribution (5) de sorte que la matière liquide (2) puisse s'échapper de l'emballage (4) et passer à travers l'accouplement (47) quand il est raccordé, avec l'emballage (4) et le conduit (46), à la chambre de distribution (5), raccordée à l'accouplement (47).

25. Dispositif de distribution conforme à la revendication 24, **dont la caractéristique est** que la valve (48) comporte un corps de valve (51) normalement de forme semi-sphérique et dans une matière élastique, le corps de valve semi-sphérique (51) est fendu, de préférence par des coupures perpendiculaires (52), celles-ci étant fermées quand le corps de valve (51) a sa forme normale semi-sphérique et le corps de valve (51) peut être ouvert au moyen du conduit (46) relié à la chambre de distribution (5) en engageant le conduit (46) dans le corps de valve (51) de sorte que les coupures (52) s'ouvrent, la valve (48) étant dès lors montée de sorte que ses parties constitutives puissent s'esquiver complètement du chemin de passage de la matière liquide (2) à l'aide du conduit (46) et passer par l'accouplement (47).

26. Dispositif de distribution conforme à l'une des revendications précédentes, **dont la caractéristique est** qu'un conduit (46), relié à la chambre de distribution (5), peut être raccordé à un emballage (4) de matière liquide (2) par l'intermédiaire d'un accouplement (47), l'emballage (4) est fourni sur un support (53) qui peut être placé, avec l'emballage (4) en position couchée sur un appui (54) de sorte qu'un raccord (55), fourni dans l'emballage (4) puisse reposer sur l'appui quand l'accouplement (47) est raccordé à l'emballage (4).
